# EUROPÄISCHE PATENTSCHRIFT

(11) **EP 2 665 938 B1**
(45) Veröffentlichungstag und Bekanntmachung des Hinweises auf die Patenterteilung: **23.10.2019**
(21) Anmeldenummer: 12701472.8
(22) Anmeldetag: 17.01.2012
(51) Int. Cl.: F04D 13/06, F04D 29/58

(54) **ELEKTRISCHE FLUIDPUMPE MIT GEKÜHLTEM NASSLAUFBEREICH**
ELECTRIC FLUID PUMP HAVING A COOLED WET SECTION
POMPE À FLUIDE ÉLECTRIQUE COMPRENANT UNE ZONE DE FONCTIONNEMENT HUMIDE REFROIDIE

(30) Priorität: 21.01.2011 DE 102011009192
(43) Veröffentlichungstag der Anmeldung: 27.11.2013
(73) Patentinhaber: Continental Automotive GmbH, 30165 Hannover (DE)
(72) Erfinder: KREUTZ, Detlef, 65606 Villmar (DE); KÖPPLER, Peter, 61118 Bad Vilbel (DE)
(86) Internationale Anmeldenummer: PCT/EP2012/050600
(87) Internationale Veröffentlichungsnummer: WO 2012/098093

(56) Entgegenhaltungen:
- EP-A1- 0 657 653
- DE-U1- 20 316 535
- FR-A- 1 091 514
- GB-A- 1 106 478
- US-A- 2 925 041
- US-A- 5 165 868

## Beschreibung

Die vorliegende Erfindung betrifft eine elektrische Fluidpumpe mit einer Pumpenwelle mit einer Achse und einem als Nasslaufbereich ausgebildeten elektrischen Pumpenantrieb mit einem an der Pumpenwelle angeordneten Rotor sowie einem diesen über einen Ringspalt umgebenden Stator.

Derartige Fluidpumpen (Flüssigkeitspumpen) finden beispielsweise als Kühlflüssigkeitspumpen, Schmiermittelpumpen etc. in Kraftfahrzeugen Verwendung, insbesondere als Wasserpumpen, Ölpumpen und dergleichen. Eine gattungsgemäße Vorrichtung ist von der US 2 925 041 A offenbart, die die Merkmalen des Oberbegriffs des Anspruchs 1 zeigt und als nächstliegender Stand der Technik angesehen wird.

Es ist in vielen Fällen erwünscht, den Nasslaufbereich (Pumpenantrieb) von derartigen Fluidpumpen zu kühlen, um beispielsweise dort angeordnete elektrische oder elektronische Bauteile auf einer möglichst niedrigen Temperatur zu halten. Hierzu hat man beispielsweise eine Ausführungsform konzipiert, bei der eine durchbohrte Welle für einen gedrosselten Kurzschluss zwischen dem Nasslaufbereich (angebunden an den Druck am Schaufelrad-Austritt) und der Saugseite der Pumpe sorgt. Nachteile sind jedoch hierbei die relativ hohen Kosten sowie eine Reduzierung des Wirkungsgrades der Pumpe.

Der vorliegenden Erfindung liegt die Aufgabe zugrunde, eine elektrische Fluidpumpe der eingangs wiedergegebenen Art zu schaffen, die mit einer einfachen Konstruktion für eine besonders gute Kühlung des Nasslaufbereiches (Pumpenantriebes) sorgt.

Diese Aufgabe wird erfindungsgemäß bei einer elektrischen Fluidpumpe der angegebenen Art dadurch gelöst, dass der Rotor mit Mitteln versehen ist, die im Rotationsbetrieb desselben eine zumindest teilweise axial gerichtete Fluidströmung im Nasslaufbereich des Pumpenantriebes erzeugen.

Diese Aufgabe wird erfindungsgemäß mit einer elektrischen Fluidpumpe nach Anspruch 1 gelöst. Der Rotor ist dabei mit Mitteln versehen, die im Rotationsbetrieb desselben eine zumindest teilweise axial gerichtete Fluidströmung im Nasslaufbereich des Pumpenantriebes erzeugen.

Somit wird für eine erzwungene Durchströmung des Nasslaufbereiches zwischen Rotor und Stator einer elektrischen Fluidpumpe gesorgt. Durch die erzwungene Fluidströmung wird ein Kühleffekt generiert, mit dem im oder am Nasslaufbereich angeordnete Bauteile, beispielsweise eine thermisch an diesen Bereich angebundene Elektronik, gekühlt werden können.

Diese Mittel werden von mindestens einem Hohlraum im Rotor und Öffnungen für den Hohlraum auf den beiden Rotorstirnseiten gebildet, wobei eine Öffnung auf einer Stirnseite radial weiter außen liegt als eine Öffnung auf der gegenüberliegenden Stirnseite. Hierbei sorgt die Fluiddruckverteilung im Hohlraum des sich drehenden Rotors für eine Einströmung des Fluids durch die radial innen angeordnete Öffnung und für eine Ausströmung des Fluids durch die radial außen angeordnete Öffnung. Somit ergibt sich eine Fluidströmungsrichtung durch den Rotorhohlraum und in Verbindung mit dem Ringspalt zwischen Rotor und Stator insgesamt eine ringförmige Fluidströmung im Nasslaufbereich des Pumpenantriebes.

Es wird somit mit einfachen Mitteln eine Durchströmung des Nasslaufbereiches einer elektrischen Fluidpumpe erzeugt und somit auf einfache und kostengünstige Weise die Kühlung von Bauteilen im/am Nasslaufbereich ermöglicht, beispielsweise einer thermisch an diesem Bereich angebundenen Elektronik.

Speziell sind die Öffnungen für den Rotorhohlraum auf den beiden Rotorstirnseiten von Bohrungen in den Rotorstirnwänden gebildet. Der mindestens eine Hohlraum des Rotors ist daher vorzugsweise an beiden Stirnflächen des Rotors mit Stirnwänden (geeigneten Blechen) abgedeckt, in denen die Bohrungen vorgesehen sind. Beide Stirnwände unterscheiden sich dadurch, dass auf der einen Stirnwand mindestens eine Bohrung vorgesehen ist, die radial weiter außen angeordnet ist als die auf der gegenüberliegenden Stirnwand vorgesehene mindestens eine Bohrung. Vorzugsweise sind pro Stirnwand mehrere Öffnungen bzw. Bohrungen vorgesehen, die beispielsweise in gleichen Umfangsabständen angeordnet sein können. Eine geeignete Anzahl von Bohrungen pro Stirnwand ist drei.

Der Rotor kann einen oder mehrere Hohlräume in seinem Inneren aufweisen. Diese Hohlräume können separat ausgebildet sein oder miteinander in Verbindung stehen. Besonders bevorzugt wird eine Ausführungsform, bei der der Rotor Zylinderform besitzt und eine Vielzahl von in Umfangsabständen angeordneten, durch Stege voneinander getrennten Hohlräumen aufweist, die mit jeweils einer Öffnung an einer Stirnseite versehen sind. Bei dieser Ausführungsform wird daher jeder Hohlraum vom Fluid durchströmt, da sich für jeden Hohlraum durch die unterschiedliche radiale Anordnung der Öffnungen auf den Stirnseiten eine entsprechende Zwangsströmung ergibt.

Erfindungsgemäß weist der Rotor speziell im Querschnitt etwa dreieckförmige, durch speichenförmige Stege voneinander getrennte Hohlräume auf. Die entsprechenden speichenförmigen Stege sorgen für die erforderliche Stabilität des Rotors, während die Hohlräume für den gewünschten Zwangsströmungseffekt sorgen.

Somit wird vorzugsweise eine Zwangsfluidströmung erzeugt, die als durch den mindestens einen Hohlraum des Rotors, eine radial äußere Öffnung, den Ringspalt zwischen Rotor und Stator und eine radial innere Öffnung verlaufende Ringströmung ausgebildet ist. Diese Ringströmung sorgt für eine hinreichend große Fluidumwälzung im Nasslaufbereich und damit für den gewünschten Kühleffekt. Es kann hierbei ein Austausch mit dem Hauptfluidstrom der elektrischen Fluidpumpe stattfinden, wodurch der Kühleffekt weiter forciert wird.

Der Nasslaufbereich des Pumpenantriebes wird vorzugsweise durch ein Spaltrohr begrenzt, das sich zwischen Rotor und Stator erstreckt und den Rotor umgibt. Der zwischen Rotor und Stator gebildete Spalt, durch den die Fluidumwälzung stattfindet, befindet sich daher bei dieser Ausführungsform zwischen Spaltrohr und Rotor. Ein derartiges Spaltrohr ist insbesondere topfförmig ausgebildet und erstreckt sich um den Rotor mit Welle und Lager herum bis in den Laufrad (Schaufelrad-) bereich, wo eine Anbindung an den Fluidstrom der geförderten Flüssigkeit erfolgt, beispielsweise an das Spiralgehäuse der Pumpe.

Das Spaltrohr kann mit dem Stator oder dem Pumpengehäuse oder dem Spiralgehäuse verbunden sein, aber auch als Einzelteil ausgebildet sein, das in den Stator geschoben wird, wonach der Rotor in das Spaltrohr geschoben wird.

Das Spaltrohr umgrenzt somit den Nasslaufbereich, wobei innerhalb des Spaltrohres die erfindungsgemäß erreichte Fluidumwälzung stattfindet.

Wie bereits erwähnt, wird durch die erfindungsgemäß erreichte Fluidumwälzung im Nasslaufbereich eine Kühlung von Bauteilen erzielt, die im oder am Nasslaufbereich angeordnet sind. Dies trifft insbesondere auf Bauteile zu, die auf der vom Laufrad (Schaufelrad) abgewandten Seite des Rotors angeordnet sind und den Teil des Nasslaufbereiches kontaktieren bzw. benachbart zu diesem angeordnet sind, der sich im Bereich dieser Stirnseite des Rotors befindet. Die von den entsprechenden Bauteilen in diesem Bereich abgegebene Wärme wird auf das Fluid im Nasslaufbereich übertragen und durch die erfindungsgemäß bewirkte Fluidumwälzung aus diesem Bereich abgeführt. Durch die Fluidumwälzung wird ein entsprechender Kühleffekt erzeugt. Das erwärmte Fluid gelangt in den Nasslaufbereich benachbart zum Schaufelrad, wo ein Austausch mit dem Hauptfluidstrom der Pumpe stattfinden kann, wodurch der Kühleffekt weiter forciert wird.

Die Erfindung wird nachfolgend anhand eines Ausführungsbeispiels in Verbindung mit der Zeichnung im Einzelnen erläutert. Es zeigen:
- Figur 1: einen Längsschnitt durch eine Ausführungsform einer Fluidpumpe und
- Figur 2: eine Detaildarstellung des Rotors der Fluidpumpe der Figur 1, wobei in der linken Darstellung der Rotor im Längsschnitt und in der rechten Darstellung der Rotor in einer Ansicht von links dargestellt ist.

Bei der in den Figuren dargestellten Fluidpumpe handelt es sich um eine Fluidpumpe eines Kraftfahrzeuges einer üblichen Bauart. Die entsprechenden Teile, die keine erfindungswesentliche Bedeutung haben, werden hier nur kurz erläutert. Die Pumpe besitzt einen Zulauf 2 und einen Pumpbereich mit einem Spiralgehäuse 4 und einem Schaufelrad 3, das auf einer Antriebswelle 5 angeordnet ist. Der Pumpenantrieb der elektrischen Pumpe weist einen ringförmig ausgebildeten Stator 7 und einen im Stator angeordneten Rotor 6 auf, der auf der Antriebswelle 5 angeordnet ist. Ein Lager für die Welle 5 ist bei 9 dargestellt. Im in der Figur rechten Teil der Pumpe befindet sich eine schematisch dargestellte Elektronik 10. Sämtliche Teile sind in einem geeigneten Pumpengehäuse 1 untergebracht.

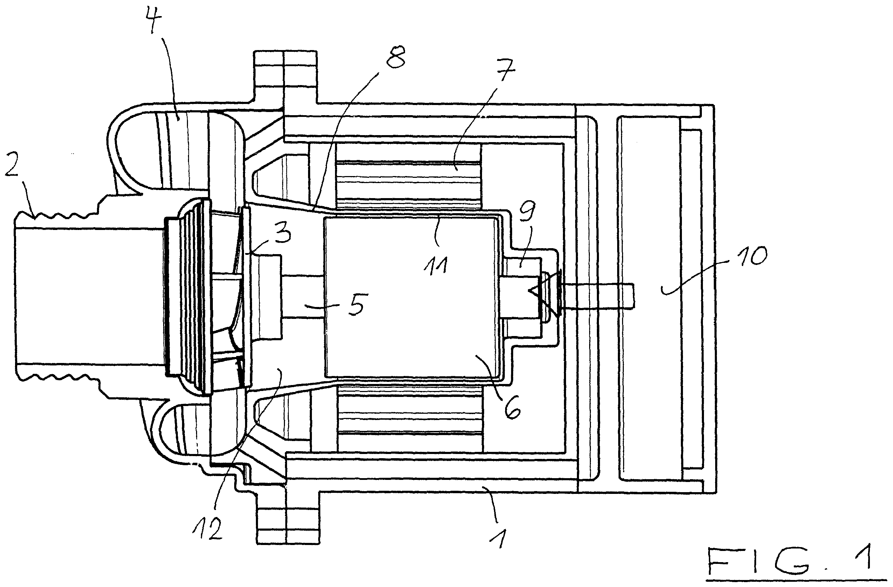

Der Rotor 6 befindet sich in einem Spaltrohr 8, das topfförmig ausgebildet ist und sich vom Schaufelradbereich bzw. Spiralgehäuse 4 durch den Spalt zwischen Stator 7 und Rotor 6 erstreckt und den Rotor auf der in der Figur rechten Stirnseite umgibt. Dieses Spaltrohr 8 umgrenzt einen Nasslaufbereich, der an den Fluidstrom im Spiralgehäuse 4 angebunden ist. Der Nasslaufbereich, der in Figur 1 bei 12 angedeutet ist, ist daher mit dem zu fördernden Fluid gefüllt.

Normalerweise befindet sich das Fluid im Nasslaufbereich in einem relativ unbewegten Zustand, während die Pumpe in Betrieb ist und sich der Rotor 6 dreht. Erfindungsgemäß ist jedoch der Rotor 6 so ausgebildet (in Figur 1 nicht gezeigt), dass im Nasslaufbereich 12 im Betrieb der Pumpe bei Drehung des Rotors 6 eine Fluidumwälzung erzielt wird, mittels der auf das Fluid im Nasslaufbereich übertragene Wärme, beispielsweise von einer elektronischen Baueinheit 10, in axialer Richtung in der Figur von rechts nach links abgeführt und dem Hauptfluidstrom der elektrischen Pumpe zugeführt werden kann. In Figur 1 ist durch den dargestellten Pfeil eine mögliche thermische Anbindung der Elektronik 10 an den Nasslaufbereich 12 zur Wärmeabfuhr schematisch gezeigt.

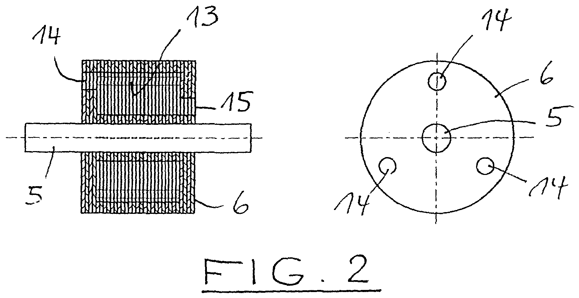

Zur Erzielung der gewünschten Fluidumwälzung weist der Rotor 6 in seinem Inneren einen Hohlraum 13 auf (siehe Figur 2), der über geeignete Bohrungen 14, 15 auf den beiden Stirnseiten des Rotors mit dem den Rotor umgebenden Nasslaufbereich 12 in Verbindung steht. Auf jeder Stirnseite sind drei Bohrungen angeordnet, wobei die Bohrungen 14 auf der in der Figur linken Stirnseite radial weiter außen angeordnet sind als die Bohrungen 15 auf der in der Figur rechten Stirnseite. Die Fluiddruckverteilung im Hohlraum 13 des sich drehenden Rotors sorgt dabei für eine Einströmung des Fluids durch die radial innen angeordneten Öffnungen 15 und für eine Ausströmung des Fluids durch die radial außen angeordneten Öffnungen 14. Somit ergibt sich eine Fluidströmung durch den Rotor in im Wesentlichen axialer Richtung in Figur 2 von rechts nach links und in Verbindung mit dem Ringspalt zwischen Rotor und Stator (zwischen Rotor und Spaltrohr) insgesamt eine ringförmige Fluidströmung (Fluidumwälzung) im Nasslaufbereich des Pumpenantriebes.

Gemäß den Figuren kann daher das durch die Elektronik 10 erhitzte Fluid im Nasslaufbereich durch die Öffnungen 15 des Rotors 6 in den Hohlraum 13 einströmen, den Hohlraum 13 axial durchströmen und aus den radial weiter außen angeordneten Öffnungen 14 aus dem Rotor austreten und in dem entsprechenden Nasslaufbereich 12 die Wärmeenergie abgeben. Das Fluid kann dann in umgekehrter axialer Richtung den Spalt 11 zwischen Rotor und Spaltrohr 8 passieren und wieder zum anderen Stirnseitenbereich des Rotors gelangen. Auf diese Weise wird daher mit einfachen Mitteln eine Fluidumwälzung im Nasslaufbereich erzielt, mittels der entsprechende Baueinheiten gekühlt werden können.

## Patentansprüche

1. Elektrische Fluidpumpe mit einer Pumpenwelle mit einer Achse und einem als Nasslaufbereich ausgebildeten elektrischen Pumpenantrieb mit einem an der Welle angeordneten Rotor sowie einem diesen über einen Ringspalt umgebenden Stator, wobei der Rotor (6) mit Mitteln versehen ist, die im Rotationsbetrieb desselben eine zumindest teilweise axial gerichtete Fluidströmung im Nasslaufbereich (12) des Pumpenantriebes erzeugen, wobei die Mittel zur Erzeugung der mindestens teilweise axial gerichteten Fluidströmung einen eine axiale Durchströmung des Rotors (6) ermöglichenden Rotorhohlraum (13) umfassen, wobei Öffnungen (14, 15) für den Hohlraum (13) auf den beiden Rotorstirnseiten ausgebildet sind, wobei eine Öffnung (14) auf einer Stirnseite radial weiter außen liegt als eine Öffnung (15) auf der gegenüberliegenden Stirnseite,
wobei die Öffnungen (14, 15) von Bohrungen in den Rotorstirnwänden gebildet sind,
wobei der Rotor (6) Zylinderform besitzt und eine Vielzahl von in Umfangsabständen angeordneten, durch Stege voneinander getrennten Hohlräumen aufweist, die mit jeweils einer Öffnung an einer Stirnseite versehen sind,
**dadurch gekennzeichnet, dass** der Rotor (6) im Querschnitt dreieckförmige, durch speichenförmige Stege voneinander getrennte Hohlräume aufweist.

2. Fluidpumpe nach Anspruch 1, **dadurch gekennzeichnet, dass** sie am Nasslaufbereich (12) eine zu kühlende insbesondere elektrische/elektronische Baueinheit (10) aufweist.

3. Fluidpumpe nach einem der Ansprüche 1 oder 2, **dadurch gekennzeichnet, dass** die Fluidströmung als durch den mindestens einen Hohlraum (13), eine radial äußere Öffnung (14), den Ringspalt zwischen Rotor und Stator und eine radial innere Öffnung (15) verlaufende Ringströmung ausgebildet ist.

4. Fluidpumpe nach einem der vorangehenden Ansprüche, **dadurch gekennzeichnet, dass** der Nasslaufbereich (12) des Pumpenantriebes von einem Spaltrohr (8) begrenzt wird, das sich zwischen Rotor (6) und Stator (7) erstreckt und den Rotor (6) umgibt.

## Claims

1. Electric fluid pump having a pump shaft with an axis and having an electric pump drive which is designed as a wet section and has a rotor arranged on the shaft and a stator surrounding said rotor across an annular gap, wherein the rotor (6) is provided with means which, during rotary operation thereof, produce an at least partially axially directed fluid flow in the wet section (12) of the pump drive wherein the means for producing the at least partially axially directed fluid flow comprise a rotor cavity (13) allowing an axial flow through the rotor (6) wherein openings (14, 15) for the cavity (13) are formed on the two rotor ends, wherein an opening (14) on one end is situated radially further out than an opening (15) on the opposite end, wherein the openings (14, 15) are formed by holes in the rotor end walls, wherein the rotor (6) has a cylindrical shape and has a multiplicity of cavities, which are arranged at circumferential spacings, are separated from one another by webs and are each provided with an opening at one end, **characterized in that** the rotor (6) has cavities triangular in cross section separated from one another by spoke-shaped webs.

2. Fluid pump according to Claim 1, **characterized in that** it has a module (10) to be cooled, in particular an electric/electronic module (10), on the wet section (12).

3. Fluid pump according to either of Claims 1 and 2, **characterized in that** the fluid flow is designed as an annular flow which passes through the at least one cavity (13), a radially outer opening (14), the annular gap between the rotor and the stator and a radially inner opening (15).

4. Fluid pump according to one of the preceding claims, **characterized in that** the wet section (12) of the pump drive is bounded by a can (8), which extends between the rotor (6) and the stator (7) and surrounds the rotor (6).

## Revendications

1. Pompe à fluide électrique comprenant un arbre de pompe ayant un axe et un entraînement de pompe électrique réalisé sous forme de zone de course humide avec un rotor disposé au niveau de l'arbre ainsi qu'un stator entourant celui-ci par le biais d'une fente annulaire, le rotor (6) étant pourvu de moyens qui, en mode de rotation du rotor, génèrent un écoulement de fluide orienté au moins en partie axialement dans la zone de course humide (12) de l'entraînement de pompe, les moyens de génération d'écoulement de fluide orienté au moins en partie axialement comprenant une cavité de rotor (13) permettant un écoulement axial à travers le rotor (6), des ouvertures (14, 15) pour la cavité (13) étant réalisées sur les deux côtés frontaux du rotor, une ouverture (14) étant située radialement d'un côté frontal plus à l'extérieur qu'une ouverture (15) du côté frontal opposé,
les ouvertures (14, 15) étant formées par des alésages dans les parois frontales du rotor,
le rotor (6) ayant une forme cylindrique et présentant une pluralité de cavités disposées à intervalles sur la périphérie, séparées les unes des autres par des nervures, et qui sont pourvues à chaque fois d'une ouverture au niveau d'un côté frontal,
**caractérisée en ce que** le rotor (6) présente des cavités de section transversale triangulaire séparées les unes des autres par des nervures en forme de rayons.

2. Pompe à fluide selon la revendication 1, **caractérisée en ce qu'**elle présente au niveau de la zone de course humide (12) une unité structurelle à refroidir, en particulier électrique/électronique (10).

3. Pompe à fluide selon l'une quelconque des revendications 1 ou 2,
**caractérisée en ce que** l'écoulement de fluide est réalisé sous la forme d'un écoulement annulaire s'étendant à travers l'au moins une cavité (13), une ouverture radialement extérieure (14), la fente annulaire entre le rotor et le stator et une ouverture radialement intérieure (15).

4. Pompe à fluide selon l'une quelconque des revendications précédentes, **caractérisée en ce que** la zone de course humide (12) de l'entraînement de pompe est limitée par un tube fendu (8) qui s'étend entre le rotor (6) et le stator (7) et qui entoure le rotor (6).
